# EUROPÄISCHE PATENTSCHRIFT

(11) **EP 2 153 484 B1**
(45) Veröffentlichungstag und Bekanntmachung des Hinweises auf die Patenterteilung: **22.09.2010**
(21) Anmeldenummer: 08757959.5
(22) Anmeldetag: 18.04.2008
(51) Int. Cl.: H01M 8/02, H01M 8/24

(54) **KÜHLKÖRPER FÜR BRENNSTOFFZELLEN**
COOLING ELEMENT FOR FUEL CELLS
CORPS DE REFROIDISSEMENT POUR PILES À COMBUSTIBLE

(30) Priorität: 08.05.2007 DE 102007021462
(43) Veröffentlichungstag der Anmeldung: 17.02.2010
(73) Patentinhaber: Forschungszentrum Jülich GmbH, 52425 Jülich (DE)
(72) Erfinder: DOHLE, Hendrik, 52249 Eschweiler (DE); EGMEN, Ayhan, 52499 Baesweiler (DE); BENDZULLA, Anne, 52066 Aachen (DE); MERGEL, Jürgen, 52428 Jülich (DE); STOLTEN, Detlef, 52076 Aachen (DE)
(74) Vertreter: Hoppe, Karin
(86) Internationale Anmeldenummer: PCT/DE2008/000656
(87) Internationale Veröffentlichungsnummer: WO 2008/138294

(56) Entgegenhaltungen:
- WO-A-2004/006356
- US-A1- 2005 106 448

## Beschreibung

Die Erfindung betrifft einen Kühlkörper für Brennstoffzellen, insbesondere einen Kühlkörper für eine Hochtemperatur-Polymerelektrolyt-Brennstoff-zelle (HT-PEFC).

### Stand der Technik

Die Polymerelektrolyt-Brennstoffzelle (engl. Polymer Electrolyte Fuel Cell, PEFC ), auch Protonenaustauschmembran-Brennstoffzelle (engl. Proton Exchange Membrane Fuel Cell, PEMFC) genannt, ist eine Niedrigtemperatur-Brennstoffzelle.

Unter Verwendung von Wasserstoff (H₂) und Sauerstoff (O₂) wird chemische in elektrische Energie umgewandelt. Der elektrische Wirkungsgrad beträgt je nach Arbeitspunkt etwa 60 %. Als Elektrolyt dient dabei normalerweise eine feste Polymermembran, beispielsweise aus Nafion. Die Membranen sind beidseitig mit einer katalytisch aktiven Elektrode beschichtet, einer Mischung aus Kohlenstoff (Ruß) und einem Katalysator, häufig Platin oder ein Gemisch aus Platin und Ruthenium (PtRu-Elektroden). H₂-Moleküle dissoziieren auf der Anodenseite und werden unter Abgabe von zwei Elektronen zu Protonen oxidiert. Diese Protonen diffundieren durch die Membran. Auf der Kathodenseite wird Sauerstoff durch die Elektronen, die zuvor ihre elektrische Arbeit verrichten konnten, reduziert; zusammen mit den durch den Elektrolyt transportierten Protonen entsteht Wasser. Um die elektrische Arbeit nutzen zu können, werden Anode und Kathode mit einem elektrischen Leiter verbunden und dazwischen der elektrische Verbraucher geschaltet.

Der innere Ladungstransport erfolgt durch Hydronium-Ionen. Auf der Anodenseite benötigt die Reaktion Wasser, welches sie auf der Kathodenseite produziert. Um den Wasserbedarf auf der Anodenseite zu decken, ist ein aufwändiges Wassermanagement erforderlich. Realisiert wird dies unter anderem durch Rückdiffusion durch die Membran und Befeuchtung der Edukte.

Da die Reaktionen einer Niedrigtemperatur-PEFC bei relativ niedrigen Temperaturen ablaufen, stellt die Toleranz gegen Kohlenmonoxid (CO) häufig ein Problem dar. Die CO-Konzentration der kathodenseitig zugeführten Luft sowie das auf der Anodenseite zugeführte wasserstoffreiche Gasgemisch soll bei Pt-Elektroden deutlich unter 10 ppm und bei PtRu-Elektroden deutlich unter 30 ppm liegen. Andernfalls werden zu viele katalytisch aktive Zentren der Katalysatoroberfläche durch CO-Moleküle blockiert. Die Sauerstoffmoleküle bzw. Wasserstoff-Moleküle können nicht mehr adsorbieren und die Reaktion bricht in kürzester Zeit zusammen. Durch das Spülen der Brennstoffzelle mit reinem Inertgas oder reinem Wasserstoff kann das CO wieder vom Katalysator entfernt werden. CO führt jedoch auch bereits in der Region der Toleranzbereiche zu einer beschleunigten, irreversiblen Alterung des Katalysators. Ziel der aktuellen Forschung ist es daher, auch die CO-Toleranz der Katalysatoren zu erhöhen.

Neuere Entwicklungen bei der Membranenentwicklung lassen auch die Markteinführung einer Hochtemperatur-Polymerelektrolyt-Brennstoffzelle (HT-PEFC) mit Betriebstemperaturen von über 100 °C bis zu 200 °C denkbar erscheinen. Bei dieser Art der Brennstoffzelle besteht die Elektrolytmembran aus Polybenzimidazol (PBI) und ist sehr temperaturbeständig. Die HT-PEFC bietet Vorteile durch ihre deutliche Unempfindlichkeit gegenüber Kohlenmonoxid. Das im Brenngas Wasserstoff als Verunreinigung enthaltene Kohlenmonoxid (CO) stört die Wirkung der Katalysatoren erheblich und muss daher in der Regel aufwändig aus dem Brenngas entfernt werden. Ab etwa 150 °C kann das CO haltige Gas den Katalysatoren dagegen kaum mehr etwas anhaben, da die Desorption regelmäßig überwiegt. Bedingt durch die deutlich höhere Temperatur beträgt die CO-Toleranz dann bis zu 1 % bei ca. 160 °C.

Dadurch wird die Reinigung des bei der Reformierung entstehenden Wasserstoffgases einfacher und kostengünstiger. Weiterhin vereinfacht sich das Wärmemanagement bedingt durch das höhere Temperaturniveau.

Die Betriebstemperatur oberhalb von 100 °C macht jedoch für die HT-PEFC ein neues, nicht wasserbasiertes Kühlkonzept notwendig. Dazu wird in der Literatur beispielsweise eine Kühlung mit Mineralöl vorgeschlagen. Mineralöl hat jedoch die nachteilige Eigenschaft zu kriechen, und beinhaltet somit die potentielle Gefahr, bei Austritt aus dem Kühlkreislauf den Katalysator der HT-PEFC zu schädigen. Aus diesem Grund ist ein Kontakt zwischen Mineralöl und der Membran-Elektroden-Einheit (Membran-Elektrodeneinheit) in jedem Fall zu vermeiden. Dies ist jedoch nicht mehr auszuschließen, wenn beispielsweise im Fall einer Wartung die Brennstoffzelle auseinandergebaut wird. Dann tritt zwangsläufig das Öl auf Grund seiner Kriecheigenschaft bis zum elektrochemischen Bereich der Zelle vor, und es kommt in der Regel zu einer Schädigung der Membran-Elektrodeneinheit.

Ein weiteres Problem bei HT-PEFC können die Anforderungen an die Eigenschaften der metallischen Bipolarplatten darstellen, die sich aus der erhöhten Betriebstemperatur ergeben können. Mit steigender Temperatur verringert sich in der Regel die Korrosionsstabilität und die Neigung zur Passivierung erhöht sich. Eine Passivierung bewirkt nachteilig einen erhöhten Übergangswiderstand und muss daher vermieden werden. Auf der anderen Seite führt eine erhöhte Korrosion zum vermehrten Einbau von Fremdionen in die Katalysatorschicht und sollte aus diesem Grund ebenfalls vermieden werden.

### Aufgabe und Lösung

Die Aufgabe der Erfindung ist es, eine Kühlung für ein Hochtemperatur-Polymer-Elektrolyt-Brennstoffzellenstack (HT-PEFC) zu schaffen, die auch bei erhöhten Temperaturen bis 200 °C die vorgenannten Probleme überwindet, insbesondere korrosionsstabil ist, nicht passivierend wirkt und zudem eine strikte Trennung zwischen dem Kühlkreislauf und den sonstigen Betriebsmitteln des Brennstoffzellenstacks ermöglicht.

Die Aufgabe der Erfindung wird gelöst durch einen Kühlkörper mit der Gesamtheit an Merkmalen gemäß Hauptanspruch. Vorteilhafte Ausführungsformen des Kühlkörpers sind den darauf rückbezogenen Unteran-sprüchen zu entnehmen.

### Beschreibung der Erfindung

Grundlage der Erfindung ist ein monolithischer Kühlkörper für den Einsatz in einer Polymerelektrolyt-Brennstoffzelle (PEFC), insbesondere für eine Hochtemperatur-PEFC. Die Aufgaben des Kühlkörpers ist es, im Betrieb der Hochtemperatur-PEFC eine ausreichende Kühlung der Einzelzellen zu gewährleisten. Ferner kann über den Kühlkörper optional die elektrische Kontaktierung der Brennstoffzellen sowie die Zuführung der Betriebsmittel sichergestellt werden.

Der erfindungsgemäße monolithische Kühlkörper weist dazu eine kamm-artige Ausgestaltung mit mehreren Rippen auf, wobei die Aussparungen zwischen diesen Rippen für die Aufnahme von Brennstoff-Einzelzellen vorgesehen sind. Der durchgehende Bereich des Kühlkörpers wird im Folgenden Basis genannt.

Solche Brennstoff-Einzelzellen sind üblicherweise aus einer Membran-Elektrodeneinheit (MEA) aufgebaut, die zwei Elektoden, Anode und Kathode sowie eine zwischen diesen angeordnete Membran umfasst, wobei sich an die äußeren Seiten der MEA jeweils eine anodische und eine kathodische Flowfieldplatte mit einem Flowfield zur Verteilung der Betriebsmittel über die entsprechende Elektrode anschließen. Die Flowfield-Platten weisen dazu mehrere Öffnungen zum Durchleiten eines Betriebsmittels auf. Diese können in bekannter Weise über interne Manidolds mit den Betriebsmittel versorgt werden.

Die inneren Rippen des erfindungsgemäßen Kühlkörpers weisen ebenfalls mehrere Öffnungen zum Durchleiten eines Betriebsmittels auf. Die Öffnungen in den Rippen sind exakt auf die Öffnungen in den Brennstoff-Einzelzellen angepasst, so dass sich bei einem Einbau der Einzelzellen in die Aussparungen des Kühlkörpers jeweils ein durchgängiges Leitungssystem zum Durchleiten, sowohl des Brennstoffs, als auch des Oxidationsmittels ergibt. Für die Zuund Ableitung der Betriebsstoffe ist wenigstens eine Außenrippe des Kühlkörpers ebenfalls mit entsprechen-den Öffnungen versehen. Über entsprechende Anschlüsse können so dem Kühlkörper die Betriebsmittel zugeführt, bzw. aus diesem wieder abgeführt werden. Vorteilhaft sind die Zu- und Abführungen für die Betriebsmittel an einer Außenrippe angeordnet.

Der erfindungsgemäße Kühlkörper weist zudem wenigstens eine Leitung zur Durchleitung eines Kühlmittels auf, die über zwei Anschlüsse, beispielsweise mit einem Wärmetauscher und/oder einer Pumpe verbunden werden kann. Die Kühlmittelleitung führt vorteilhaft entlang der Basis an den einzelnen Aussparungen vorbei. Als besonders vorteilhaft hat sich eine U-förmige Anordnung entlang der Basis herausgestellt, so dass sich Ein- und Auslass der Kühlleitung an einer Seite des Kühlkörpers befinden. In einer vorteilhaften Ausgestaltung der Erfindung werden der Ein- und Auslass für das Kühlmittel an derselben Seite (Außenrippe) des Kühlkörpers angeordnet, an der sich auch die Zu- und Abführungsanschlüsse für die Betriebsmittel befinden. Da die Kühlleitung komplett im Inneren des Kühlkörpers angeordnet ist, kann es vorteilhaft auch bei einem häufigen Ein- oder Ausbau von Einzelzellen nicht zu einer Leckage des Kühlkreislaufes führen.

Zur Verhinderung eines Kurzschlusses zwischen den Brennstoff-Einzel-zellen in den Aussparungen des Kühlkörpers ist dieser aus einem nicht elektrisch leitenden Material angefertigt und/oder entsprechend isoliert ausgestaltet. Als geeignetes Material zur Herstellung des Kühlkörpers sind dafür beispielsweise Kunststoffe, Kompositwerkstoffe oder auch mit Aluminium beschichtete Werkstoffe zu nennen.

Für den Betrieb des Brennstoffzellenstacks muss die Weiterleitung des Stroms zwischen den Einzelzellen gewährleistet sein. Dazu weist der Kühlkörper in einer vorteilhaften Ausgestaltung zusätzlich Mittel zur Stromleitung zwischen den einzelnen Aussparungen an. In einer ersten vorteilhaften Ausgestaltung können dies durchgängig leitende Bereiche in den Rippen des Kühlkörpers sein, die so einen leitenden Kontakt zwischen zwei in benachbarten Aussparungen angeordneten Brennstoffzellen ermöglichen. Als geeignetes Material für die elektrische Leitung wären Metalle oder auch elektrisch leitende Kunststoffe zu nennen. Diese können beispielsweise direkt bei der Herstellung durch Spritzgießen als Keime eingebracht werden. Alternativ kann der fast fertige Kühlkörper auch entsprechend durchbohrt werden, und in die dadurch entstehenden Öffnungen entsprechendes leitfähiges Material eingesetzt werden.

Eine weitere Ausgestaltung dieser Mittel sieht U-förmige Klammern aus elektrisch leitendem Material vor, welche von oben auf die Rippen des Kühlkörpers geschoben werden können. Besonders vorteilhaft weisen die Rippen des Kühlkörpers dazu entsprechende Vertiefungen zur pass-genauen Aufnahme dieser Klammern auf.

### Spezieller Beschreibungsteil

Im Folgenden wird die Erfindung anhand von einigen Figuren näher erläutert, ohne dass dadurch die Erfindung eingeschränkt wird. Ein Fachmann wird leicht die zu Grunde liegende Idee der Erfindung erkennen und weitere auch nicht explizit genannte Ausgestaltungen sowohl der Materialien, als auch der erforderlichen Geometrien der einzelnen Komponenten des Kühlkörpers als mit offenbart ansehen.

Legende zu den Figuren:
- 1: monolithischer Kühlkörper mit
1B Basis und
1R Rippen mit Öffnungen für die Betriebsmittel (Brennstoff und Oxidationsmittel)
1Ra Außenrippen
- 2: Aussparungen zwischen den Rippen
- 3: Brennstoff-Einzelzelle umfassend Bauteile 4+5+6
- 5: Membran-Elektrodeneinheit
- 4, 6: Flowfield-Platten mit Öffnungen für die Betriebsmittel
- 7: Flowfield
- 8K: Ein- und Auslass für Kühlmittelleitung an der Basis (1B)
- 8B: Ein- und Auslass für die Betriebsmittel an einer Außenrippe (1Ra)
- 9: elektrisch leitende Durchgänge in den Rippen
- 10: U-förmige, elektrisch leitende Klammer
- 11: passgenaue Aussparung einer Rippe (1R, 1 Ra) zur Aufnahme der Klammer 10

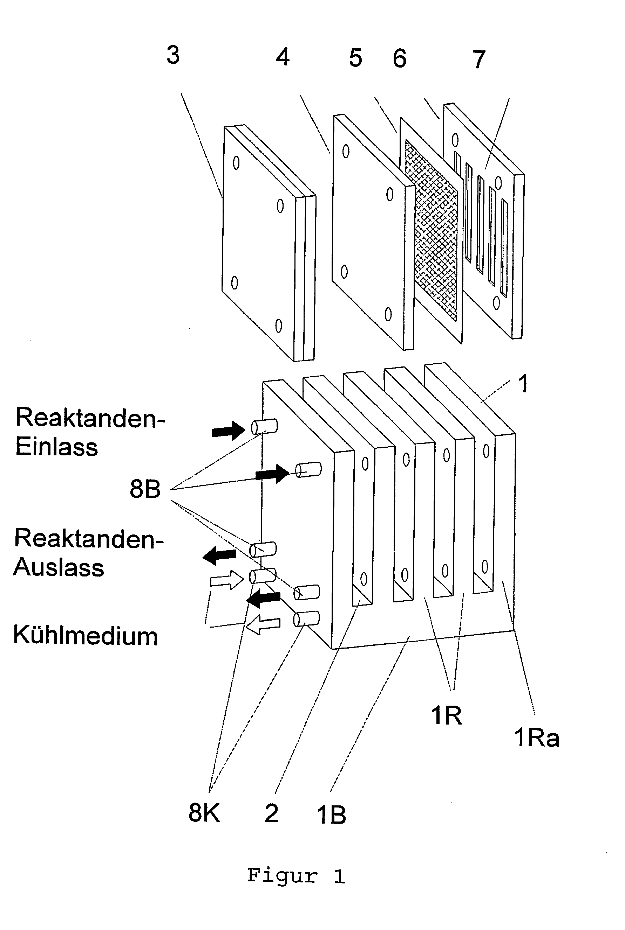

Figur 1 zeigt eine erste Ausgestaltung der Erfindung mit dem Kühlkörper 1, umfassend eine durchgehende Basis 1B und Rippen 1R, 1Ra, wobei die Anordnung der Rippen entsprechende Aussparungen 2 ermöglichen, in die jeweils Brennstoff-Einzelzellen 3 integriert werden können. Eine Brennstoff-Einzelzelle 3 besteht dabei aus einer Membran-Elektrodeneinheit (MEA) 5 mit einer Anode, einer Kathode sowie einer dazwischen angeordneten Polymermembran. Zu beiden Seiten der Membran-Elektrodeneinheit 5 sind Flowfield-Platten 4, 6 angeordnet, die jeweils auf der der Membran-Elektrodeneinheit zugewandten Seite ein Flowfield 7 zur Verteilung der Betriebsmittel an die entsprechende Elektrode aufweisen. Die Brennstoff-Einzelzellen 3 fügen sich passgenau in die Aussparungen 2 des Kühlkörpers ein, so dass die Öffnungen in den Einzelzellen 3 zusammen mit den Durchgängen in den Rippen 1R, 1Ra des Kühlkörpers 1 jeweils ein durchgängiges, dichtes Leitungssystem für das Brenn- und das Oxidationsmittel bilden.

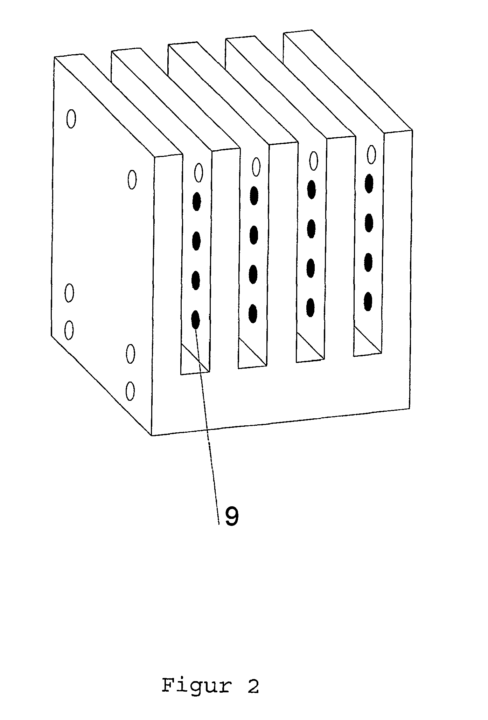

Figur 2 zeigt eine weitere Ausgestaltung der Erfindung mit einem Mittel zum Weiterleiten des Stroms zwischen den in den Aussparungen 2 anzuordnenden Einzelzellen mit Hilfe von leitfähigen Durchgängen 9 in den Rippen 1R des Kühlkörpers 1, wobei solche Mittel auch in den außen liegenden Rippen 1Ra angeordnet sein können.

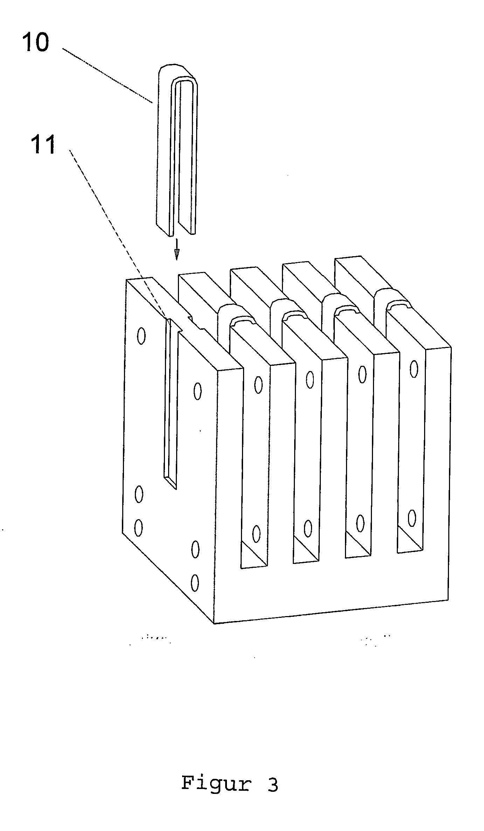

In Figur 3 ist eine dritte Ausgestaltung dargestellt. Hier weisen die Rippen 1R, 1Ra des Kühlkörpers 1 passgenaue Vertiefungen 11 zur Aufnahme der U-förmigen Klammern 10 auf, die zur Weiterleitung des Stroms zwischen den Einzelzellen 3 in den Aussparungen 2 vorgesehen sind.

## Patentansprüche

1. Kühlkörper (1) für den Einsatz in einem Polymerelektrolyt-Brennstoffzellenstack,
**dadurch gekennzeichnet,**
- **dass** der Kühlkörper monolithisch ist,
- **dass** der Kühlkörper kammartig ausgestaltet ist und eine Basis (1B) und mehrere Rippen (1R, 1Ra) aufweist, wobei die Anordnung der Rippen entsprechende Aussparungen (2) zur Aufnahme von Brennstoff-Einzelzellen (3) ausbilden,
- das der Kühlkörper (1) ein durchgehendes Leitungssystem zum Durchleiten eines Kühlmittels umfasst.

2. Kühlkörper nach Anspruch 1, **dadurch gekennzeichnet, dass** das durchgehende Leitungssystem zum Durchleiten eines Kühlmittels in der Basis des Kühlkörpers (1B) angeordnet ist.

3. Kühlkörper nach einem der Ansprüche 1 bis 2, **dadurch gekennzeichnet, dass** er aus einem elektrisch nicht leitenden Material besteht.

4. Kühlkörper nach einem der Ansprüche 1 bis 3, **dadurch gekennzeichnet, dass** er wenigstens in den innen liegenden Rippen (1R) zusätzlich Mittel (9, 10) zur Weiterleitung des Stroms zwischen den Aussparungen (2) aufweist.

5. Kühlkörper nach Anspruch 4, bei dem in wenigstens einer Rippe (1R, 1Ra) ein durchgängiger Bereich aus elektrisch leitendem Material als Mittel zur Weiterleitung des Stroms angeordnet ist.

6. Kühlkörper nach Anspruch 5, bei dem alle innen liegenden Rippen (1R) einen durchgängigen Bereich aus elektrisch leitendem Material aufweisen.

7. Kühlkörper nach Anspruch 4, mit wenigstens einer U-förmigen Klammer (10) aus elektrisch leitendem Material als Mittel zur Weiterleitung des Stroms, die auf einer Rippe (1R, 1Ra) des Kühlkörpers angeordnet ist.

8. Kühlkörper nach Anspruch 7, bei dem alle innen liegenden Rippen (1R) eine U-förmige Klammer (10) aus elektrisch leitendem Material aufweisen.

9. Kühlkörper nach Anspruch 7 bis 8, bei dem wenigstens eine Rippe (1R, 1Ra)) eine passgenaue Vertiefung (11) zur Aufnahme der U-förmigen Klammer (10) aufweist.

10. Kühlkörper nach einem der Ansprüche 1 bis 9, **dadurch gekennzeichnet, dass** er in den Rippen (1R, 1Ra) Öffnungen für die Zu- bzw. Abfuhr der Betriebsmittel für die Brennstoff-Einzelzellen aufweist, derart, dass diese zusammen mit den in die Aussparungen einsetzbaren Einzelzellen ein durchgehendes Leitungssystem zu bilden vermögen.

## Claims

1. Cooling element (1) for use in a polymer electrolyte fuel cell stack, **characterized in that**
the cooling element is monolithic,
the cooling element has a comb-like configuration comprising a base (1B) and a plurality of fins (1R, 1 Ra), the fin arrangement forming corresponding recesses to receive individual fuel cells (3),
the cooling element (1) comprises a through duct system for conveying coolant.

2. Cooling element according to Claim 1, **characterized in that** the through duct system for conveying coolant is arranged in the base of the cooling element (1 B).

3. Cooling element according to either of Claims 1 and 2, **characterized in that** it consists of an electrically nonconductive material.

4. Cooling element according to any one of Claims 1 to 3, **characterized in that** it additionally comprises means (9, 10) at least in the internally located fins (1 R) for relaying current between the recesses (2).

5. Cooling element according to Claim 4 wherein a through-going region of electrically conductive material is arranged in at least one fin (1R, 1 Ra) to relay the current.

6. Cooling element according to Claim 5 wherein all internally located fins (1 R) have a through-going region of electrically conductive material.

7. Cooling element according to Claim 4 with a least one U-shaped clip (10) made of electrically conductive material as means of relaying current, arranged on a fin (1R, 1 Ra) of the cooling element.

8. Cooling element according to Claim 7 wherein all internally located fins (1 R) have a U-shaped clip (10) made of electrically conductive material.

9. Cooling element according to Claims 7 and 8 wherein at least one fin (1 R, 1 Ra) has a close-fitting recess (11) to receive the U-shaped clip (10).

10. Cooling element according to any one of Claims 1 to 9, **characterized in that** it has holes in the fins (1R, 1 Ra) for the supply and removal of the operating media, such that these are able to form, together with the individual cells insertable into the recesses, a through-going duct system.

## Revendications

1. Corps de refroidissement (1) destiné à être utilisé dans une pile de cellules à combustible à électrolyte polymère, **caractérisé**
- **en ce que** le corps de refroidissement est monolithique,
- **en ce que** le corps de refroidissement est réalisé en forme de peigne et comporte une base (1B) et plusieurs ailettes (1R, 1Ra), l'agencement des ailettes formant des évidements (2) correspondants pour le logement de cellules individuelles à combustible (3),
- **en ce que** le corps de refroidissement (1) comprend un système de conduites continu pour le passage d'un réfrigérant.

2. Corps de refroidissement selon la revendication 1, **caractérisé en ce que** le système de conduites continu pour le passage d'un réfrigérant est disposé dans la base du corps de refroidissement (1B).

3. Corps de refroidissement selon l'une des revendications 1 à 2, **caractérisé en ce qu'**il est réalisé dans un matériau non conducteur électrique.

4. Corps de refroidissement selon l'une des revendications 1 à 3, **caractérisé en ce qu'**il comporte, au moins dans les ailettes (1R) disposées à l'intérieur, des moyens (9, 10) complémentaires de conduction du courant entre les évidements (2).

5. Corps de refroidissement selon la revendication 4, où une zone passante en matériau conducteur électrique est disposée comme moyen de conduction du courant dans au moins une ailette (1R, 1Ra).

6. Corps de refroidissement selon la revendication 5, où toutes les ailettes (1R) disposées à l'intérieur comportent une zone passante en matériau conducteur électrique.

7. Corps de refroidissement selon la revendication 4, avec au moins une agrafe en forme de U (10) en matériau conducteur électrique, en tant que moyen de conduction du courant, disposée sur une ailette (1R, 1Ra) du corps de refroidissement.

8. Corps de refroidissement selon la revendication 7, où toutes les ailettes (1R) disposées à l'intérieur comportent une agrafe en forme de U (10) en matériau conducteur électrique.

9. Corps de refroidissement selon la revendication 7 ou la revendication 8, où au moins une ailette (1R, 1Ra) comporte une rainure à ajustement de précision (11) pour le logement de l'agrafe en forme de U (10).

10. Corps de refroidissement selon l'une des revendications 1 à 9, **caractérisé en ce qu'**il comporte des ouvertures dans les ailettes (1R, 1Ra) pour l'amenée et l'évacuation des combustibles pour les cellules individuelles à combustible, de telle manière que lesdites ouvertures puissent former un système de conduites continu avec les cellules individuelles à mettre en place dans les évidements.
